# EUROPEAN PATENT APPLICATION

(11) **EP 4 592 042 A1**
(43) Date of publication of application: **30.07.2025**
(21) Application number: 22961060.5
(22) Date of filing: 26.09.2022
(51) Int. Cl.: B25J 11/00, B25J 5/00, B25J 9/16, B25J 13/00, B25J 13/06, B25J 13/08, B25J 19/02

(54) **GUIDE ROBOT AND OPERATING METHOD OF GUIDE ROBOT**

(71) Applicant: LG Electronics Inc., Yeongdeungpo-gu Seoul 07336 (KR)
(72) Inventor: LEE, Hyunok, Seoul 06772 (KR); PARK, Sinyoung, Seoul 06772 (KR); SEO, Jaehong, Seoul 06772 (KR)
(74) Representative: Vossius & Partner Patentanwälte Rechtsanwälte mbB
(86) International application number: PCT/KR2022/014365
(87) International publication number: WO 2024/071457

(57) **Abstract**

Disclosed are a guide robot and an operating method of the guide robot. When a monitoring function is activated, the guide robot according to the present disclosure may monitor the surroundings by adaptively varying a driving path for monitoring on the basis of information about a state of the robot or a state of a driving space, instead of running a monitoring area only in a determined driving path. Also, when an event that require additional monitoring is recognized, the additional monitoring may be performed by deviating from the monitoring area and an appropriate reaction may be actively performed according to a result of the additional monitoring.

## Description

### Technical Field

The present disclosure relates to a guidance robot and a method of operating the guidance robot and, more specifically, to a guidance robot capable of performing a surveillance function while traveling independently and a method of operating the guidance robot.

### Background Art

In recent years, there has been ever-increasing interest in guidance robots providing various guidance services to users. While autonomously traveling without user operation, for example, the guidance robots provide various guidance services to users by performing a voice conversation function or an interaction function using a touchscreen.

For example, the guidance robots typically perform guidance functions during the day when there are many visitors and mainly perform surveillance functions at night when there are no visitors. However, for enhanced security, the surveillance functions are also utilized during the day when necessary.

It is common for the guidance robots to perform monitoring using surveillance cameras while traveling along a designated traveling path within a predetermined area. Specifically, locations that the guidance robot needs to travel through are enumerated in order, and then the guidance robot performs monitoring while traveling through the locations.

That is, the surveillance functions of the guidance robots in the related art are limited to performing CCTV recording using the camera while repeatedly traveling along the designated traveling path. This corresponds to an operational level that is, in fact, not significantly different from that of a stationary CCTV.

In addition, the guidance robot travels and operates using a charged battery. Because of this, when the remaining battery charge is insufficient while the guidance robot repeatedly travels along the designated traveling path, the guidance robot moves to a charging station to recharge the battery. Since the guidance robot consumes a large amount of battery power while traveling, performing uniform surveillance while traveling depletes the battery quickly and reduces the duration of the surveillance function.

Therefore, reflecting the features of the guidance robot that utilizes autonomous traveling and ever-improving intelligence capabilities, the surveillance function is required to be more efficient.

### Disclosure of Invention

### Technical Issue

An object of some embodiments of the present disclosure is to provide a guidance robot capable of performing efficient surveillance in accordance with the current state of the guidance robot and the characteristics of a traveling space, reflecting the features of the guidance robot, which utilizes autonomous traveling and ever-improving intelligence capabilities, and a method of operating the guidance robot.

Another object of some embodiments of the present disclosure is to provide a guidance robot capable of performing surveillance while adaptively varying a traveling path, taking into consideration the current state of the guidance robot and the characteristics of a traveling space, and a method of operating the guidance robot.

A further object of some embodiments of the present disclosure is to provide a guidance robot capable of independently determining and performing a corresponding operation suitable for the result of surveillance and a method of operating the guidance robot.

Another object of some embodiments of the present disclosure is to provide a guidance robot capable of continuously detecting an abnormality outside a designated surveillance area when necessary and performing an operation corresponding to the result of detecting the abnormality in a manner that varies depending on the situation, and a method for operating the guidance robot.

### Solution to Problem

A guidance robot according to the present disclosure, when a surveillance function is activated, is capable of monitoring the surroundings while adaptively varying a traveling path depending on a state of the robot or a state of a traveling space, instead of traveling along only a designated traveling path within a surveillance area.

When an event requiring additional surveillance is recognized while the surveillance area is monitored, the guidance robot is capable of performing the additional surveillance outside the surveillance area and actively performing an appropriate corresponding operation in accordance with the result of the additional surveillance.

Specifically, according to one aspect of the present disclosure, there is provided a guidance robot including: a camera that, when activated, captures an image of the surroundings of the guidance robot; a traveling-enabling unit that moves the guidance robot; a sensing unit that collects state information of the guidance robot; and a processor that is electrically connected to the camera, the traveling-enabling unit, and the sensing unit. The processor activates the camera by executing a surveillance move, receives the state information of the guidance robot while the guidance robot travels within a surveillance area in the surveillance mode, and determines a traveling path within the surveillance area based on the received state information of the guidance robot.

In an embodiment, in the guidance robot, the processor may determine the traveling path in such a manner as to monitor the entire surveillance area, based on the field of view of the camera.

In an embodiment, in the guidance robot, the state information of the guidance robot may include at least one of the following: the remaining battery charge of the guidance robot, the estimated time required to monitor the entire surveillance area, and the presence of another collaborative guidance robot.

In an embodiment, in the guidance robot, the processor may execute a power-saving mode based on the remaining battery charge of the guidance robot, move the guidance robot to a specific location within the surveillance area by controlling the traveling-enabling unit when executing the power-saving mode, and thus monitor the surveillance area. At this point, the specific location may vary depending on situational information collected in the surveillance area.

In an embodiment, in the guidance robot, the processor may recognize the occurrence of a pre-established surveillance event while the guidance robot travels within the surveillance area, perform an operation corresponding to the recognized surveillance event, and then resume monitoring the surveillance area.

In an embodiment, in the guidance robot, the pre-established surveillance event may be a situational context associated with at least one of the following: visitor condition surveillance, visitor surveillance for epidemic prevention, protected area surveillance, or in-building condition surveillance.

In an embodiment, in the guidance robot, the processor may compute a POI location for performing an operation corresponding to the recognized surveillance event based on a location where the situational context occurs and establish the next traveling path based on the computed POI location and the current location of the guidance robot.

In an embodiment, the guidance robot may further include a touchscreen that displays information associated with the recognized surveillance event, wherein the processor may be electrically connected to the touchscreen and, through the touchscreen, request a feedback response to an operation corresponding to the recognized surveillance event.

In an embodiment, in the guidance robot, the sensing unit may collect state information of a traveling space, and the processor may determine the next traveling direction based on the collected state information of the traveling space while the guidance robot travels within the surveillance area in the surveillance mode, identify a surveillance target corresponding to the state information of the traveling space, which is collected while the guidance robot travels in the determined traveling direction, and perform a corresponding operation associated with the identified surveillance target.

In an embodiment, in the guidance robot, the state information of the traveling space may be state data including at least one of the following: temperature data, slip data, or inclination data of the traveling space.

In an embodiment, in the guidance robot, the next traveling direction of the guidance robot may be determined to be a direction associated with a point where an abnormality is detected as a result of analyzing the state data of the traveling space.

In an embodiment, in the guidance robot, the processor may establish a candidate group of POIs for identifying the surveillance target based on the point where the abnormality is detected, and select one with a high expected abnormality detection weight, as a search POI, from the established candidate group of POIs, and, after the guidance robot travels to the search POI, the processor may cumulatively collect the state information of the traveling space and detect the next search POI based on the result of the collection.

In an embodiment, in the guidance robot, at least one of the following may be located outside the surveillance area: the search POI or the next search POI.

In an embodiment, the guidance robot may further include a touchscreen on which to display information associated with a corresponding operation associated with the identified surveillance target.

In an embodiment, the guidance robot may further include a communication unit, wherein the processor may verify that there is no feedback response to the displayed information within a predetermined time period, and transmit the result of identifying the surveillance target and a corresponding operation associated with the identified surveillance target to a predetermined terminal of a manager through the communication unit.

According to another aspect of the present disclosure, there is provided a method of operating a guidance robot, the method including: a step of executing a surveillance mode by activating a camera of the guidance robot; a step of acquiring state information of the guidance robot while the guidance robot travels within a surveillance area in the surveillance mode; and a step of determining a traveling path within the surveillance area in a manner that varies based on the acquired state information of the guidance robot.

### Advantageous Effects of Invention

A guidance robot and a method of operating the guidance robot according to some embodiments of the present disclosure are capable of actively establishing a traveling path within a surveillance or changing an existing traveling path based on types of state information, such as the remaining battery charge, the estimated time required to monitor the entire surveillance area, and the presence of another cooperative guidance robot, while considering the field of view of a surveillance camera. Accordingly, more effective and intelligent surveillance can be performed instead of uniform surveillance.

In addition, a guidance robot and a method of operating the guidance robot according to some embodiments of the present disclosure are capable of performing segmented or specialized surveillance, such as epidemic prevention or protected area surveillance. When a problem occurrence event takes place, tracking of an associated target and an appropriate corresponding operation can be performed.

In addition, as the appropriate response operation, a feedback response can be requested, and in a case where there is no response to the request, an alert notification can be delivered to a manager. Accordingly, more appropriate and detailed abnormality detection and a corresponding operation can be performed depending on the situation.

### Brief Description of Drawings

FIG. 1 is a view illustrating an example of a guidance robot according to the present disclosure.
FIG. 2 is a block diagram illustrating an exemplary configuration of the guidance robot according to the present disclosure.
FIG. 3 is a view that is referenced to describe a surveillance function of a general guidance robot.
FIG. 4 is a representative flowchart that is referenced to describe a method of operating the guidance robot according to the present disclosure.
FIG. 5 is a view illustrating that the guidance robot according to the present disclosure performs the surveillance function while considering a camera's field of view.
FIGS. 6A, 6B, and 6C are views illustrating various examples in which a traveling path within a surveillance area is established in a manner that varies based on different states of the guidance robot according to the present disclosure.
FIG. 7, 8A, 8B, 9, and 10 are views that are referenced to describe examples in which the guidance robot according to the present disclosure recognizes a surveillance event and performs a corresponding operation while traveling within a surveillance area.
FIG. 11 is a flowchart that is referenced to describe the method of operating the wearable device according to the present disclosure.
FIGS. 12, 13, and 14 are views that are referenced to describe a method of enabling the guidance robot according to the present disclosure to detect an abnormality in a cooled or heated state and identify a surveillance target and corresponding operations associated with this method.
FIGS. 15A, 15B, and 15C are views that are referenced to describe an example of a method of checking the managed state of a building when the guidance robot according to the present disclosure detects an abnormal inclination of the floor surface of the building.

### Mode to Create Innovation

Embodiments disclosed in the present specification will be described in detail below with reference to the accompanying drawings, and regardless of reference numerals, the same or similar constituent elements are given the same reference numeral, and descriptions thereof are not repeated. The terms 'module' and 'unit' are hereinafter interchangeably or individually used to refer to a constituent element only for descriptive convenience in the present specification and therefore are not themselves intended to take on different meanings or to depict different functions. In addition, when describing the embodiments disclosed in the present specification, a detailed description of a related well-known technology will be omitted if it is determined that it would obscure the nature and gist of the present disclosure. In addition, the accompanying drawings are provided only to help easily understand the embodiments disclosed in the present specification. It should be understood that the technical idea disclosed in the present specification is not limited by the accompanying drawings. Furthermore, it should be understood that any alteration or equivalent of, or any substitute for, a constituent element according to an embodiment of the present disclosure, which falls within the scope of the technical idea of the present disclosure, is included within the scope of the present disclosure.

The ordinal numbers first, second, and so forth may be used to describe various elements, but they do not limit these elements. These ordinal numbers are only used to distinguish one element from another.

It should be understood that a constituent element, when referred to as 'connected to' or 'have access to' a different constituent element, may be directly connected to or have direct access to the different constituent element or may be connected to or have access to the different constituent element, with a third constituent element in between. Likewise, it should be understood that a constituent element, when referred to as 'directly connected to' or 'have direct access to' a different constituent element, may be connected to or have access to the different constituent element, without a third constituent element in between.

A noun in singular form, unless it has a different meaning in context, has the same meaning as when used in its plural form.

The terms 'include,' 'have,' and equivalent expressions, which are used in the present application, should be understood as indicating the presence of a feature, number, step, operation, constituent element, component, or combination thereof, without precluding the possibility of the presence or addition of one or more features, numbers, steps, operations, constituent constituents, components, or combinations thereof.

A "guidance robot" disclosed in the present specification refers to a robot capable of providing welcome greetings, path guidance, product guidance, parking guidance, library guidance, and various types of information, such as product search information, airport information, and docent information, to users in public places, including airports, shopping malls, such as department stores, accommodations, such as hotels, and cultural complexes, such as art museums and libraries.

In addition, the "guidance robot" disclosed in the present disclosure is capable of performing autonomous traveling to guide users to paths, specific places, and other destinations.

In addition, objects that move in a designated space while the "guidance robot" disclosed in the present disclosure travels within the designated space, collectively include visitors, users, obstacles, and similar entities.

In addition, the "guidance robot" disclosed in the present disclosure may include various output means associated with touchscreens, sound output units, LEDs, tactile sensors, and similar components to provide information or guidance in various forms (visual, auditory, and tactile).

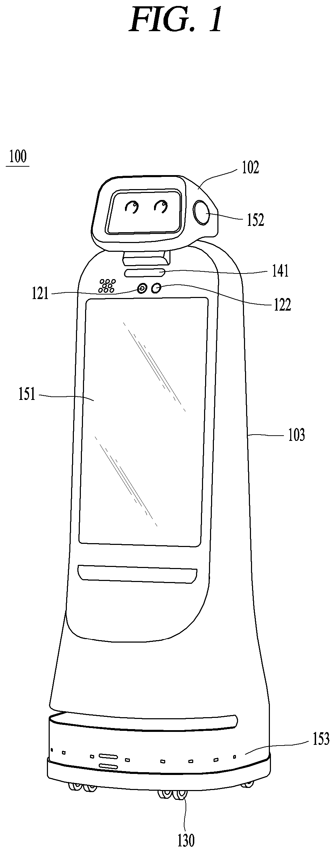

FIG. 1 is a view illustrating an example of a guidance robot 100 according to the present disclosure.

With reference to FIG. 1, the guidance robot 100 according to the present disclosure may be configured to include a head 102, a camera 121, a speaker 152, a voice recognition unit (not illustrated), a display 151, and a traveling-enabling unit 130. However, depending on the application, the guidance robot 100 according to the present disclosure may be configured to omit one or more of the constituent elements disclosed in the present specification or to further include one or more constituent elements.

The exterior appearance of the guidance robot 100 according to the present disclosure may broadly include an upper module, which includes the head 102 and the display 151, and a lower module, which includes the traveling-enabling unit 130. The upper module and the lower module may be provided in such a manner as to be detachably attached to each other.

The upper module provides a user interface that is changeable depending on service environments. The lower module provides traveling functionality for moving the main body of the guidance robot 100.

The upper module may include a body unit, which forms the main structure and includes the display 151, and a head unit 102, which includes the camera 121 or a similar component. However, depending on the application, the upper module may also be configured in such a manner that a camera is included in the body unit and that a touchscreen is arranged on the head unit 102.

The camera 121 may be provided on one side of the casing of the head unit 102 or on one side of the casing of the body unit. In addition, a plurality of cameras 121 may be provided. In this case, one camera 121 may be provided on the front surface of the main body and positioned to face forward. Another camera 121 may be provided on the lateral or rear surface and positioned to face sideways or backward. Accordingly, an angle of view covering 360 degrees can be formed.

In a case where a plurality of cameras 121 is provided, examples of a first camera may include a 3D stereo camera. The 3D stereo camera may perform functions such as obstacle detection, recognition of a user's face, and stereoscopic image capture. Using the first camera, the guidance robot 100 may detect and avoid an obstacle present in its moving direction and recognize a user, thereby performing various control operations. In addition, examples of a second camera may include a Simultaneous Localization And Mapping (SLAM) camera. The SLAM camera tracks the current location of a camera through feature mapping and performs a function of creating a 3D map based on this location. The guidance robot 100 may recognize its current location using the second camera.

In addition, the camera 121 may recognize an object within its field of view and perform a function of capturing a still image and a moving image. In this regard, the camera 121 may include at least one of the following: a camera sensor (e.g., a CCD sensor, a CMOS sensor, or a similar type), a photo sensor (or image sensor), or a laser sensor. The camera 121 and the laser sensor may operate together to detect a touch on a 3D stereoscopic image by a detection target. The photo sensor may be stacked on a display element, and be configured to scan the motion of the detection target that approaches the touchscreen. More specifically, the photo sensor includes photodiodes and transistors (TRs) mounted in rows/columns, and thus scans an object placed on the photo sensor using an electrical signal that varies with the amount of light applied to the photodiodes. That is, the photo sensor may compute the coordinates of the detection target that vary with a change in the amount of light, and acquire the location information of the detection target from these coordinates.

A sound output unit 152 performs a function of alerting the user to information to be provided in the form of voice and may, for example, take the form of a speaker. Specifically, a response or a search result, which corresponds to the user's voice received through a sound reception unit 122 and a voice recognition unit (not illustrated), which are included in the guidance robot 100, is output in the form of voice through the sound output unit 152. The sound output unit 152 may be provided on the outer circumferential surface of the body unit, which includes the head unit 102 or the display 151. In addition, the sound output unit 152 may output voice information associated with a screen (e.g., a menu screen, an advertisement screen, or a similar screen) displayed on the display 151.

The sound reception unit 122 performs a function of receiving the user's voice or similar input and may, for example, take the form of a microphone. The sound reception unit 122 may process an external sound signal into electrical voice data, and various noise elimination algorithms for eliminating noise that occurs in the process of inputting the external sound signal may be implemented.

The display 151 may be positioned in the lengthwise direction of the body unit that is one direction of the body unit, and display a screen to provide visual information, for example, guidance information. In addition, the display 151 may be configured to include a display module, a touch sensor, and a pressure sensor.

The display 151, for example, may be configured in such a manner as to open and close the inside of the body unit by being coupled to a movable guide means. In addition, the display 151, for example, may also be configured in such a manner as to be fastened to the body unit and fixed using a fixation member.

In addition, although not illustrated in detail, the display 151 may be provided to face the opposite direction of the head 102, or the displays 151 may be provided to face the same direction as and the opposite direction of the head 102, respectively. This configuration enables the guidance robot 100 to move along an established path in advance of the user to guide him/her to a path. Alternatively, before moving along the established path in advance of the user, the head 102 may also first rotate by 180 degrees and thus change its exterior appearance as if the display 151 were positioned to face the opposite direction of the head 102.

In this case, the display 151 performs a function of displaying visual information (e.g., path guidance information and inquiry information) associated with a currently provided service. The user can see the display 151 installed on the rear side of the guidance robot 100 while moving along with the guidance robot 100.

In addition, the displays 151 may be provided on both the front and rear surfaces, respectively, of the main body. In this case, different screens may be displayed on a first display, provided on the front surface of the main body, and a second display, provided on the rear surface of the main body (e.g., a screen for interacting with the user is displayed on the first display, and an advertisement screen or a similar screen is displayed on the second display). In addition, a display unit for outputting various facial expressions of the guidance robot may be provided on the front surface of the head unit 102.

The traveling-enabling unit 130 moves and rotates the main body of the guidance robot 100. To this end, the traveling-enabling unit 130 may be configured to include a plurality of wheels and a drive motor. A driving operation by the traveling-enabling unit 130 is controlled by a processor based on a received control command. An alert may be provided through an LED output means 153 before or after the driving operation.

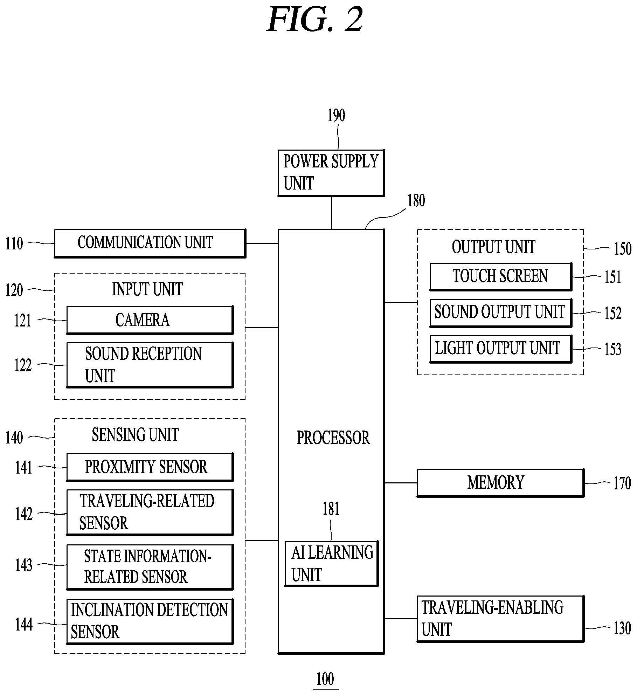

FIG. 2 is a block diagram illustrating an exemplary detailed configuration of the guidance robot according to the present disclosure.

The guidance robot 100 according to the present disclosure may include a communication unit 110, an input unit 120, the traveling-enabling unit 130, a sensing unit 140, an output unit 150, a memory 170, a processor 180, a power supply unit 190, and other similar units. The constituent elements illustrated in FIG. 2 are not essential for realizing the guidance robot. Therefore, the guidance robot described in the present specification may further include one or more constituent elements beyond those illustrated or may omit one or more of them.

The communication unit 110 may include one or more modules that enable wireless communication between the guidance robot 100 and an external server, for example, an artificial intelligence server, or between the guidance robot 100 and an external terminal. In addition, the communication unit 110 may include one or more modules that connect the guidance robot 100 to one or more networks.

The communication unit 110 may communicate with the artificial intelligence server or a similar sever using wireless Internet communication technologies, for example, such as Wireless LAN (WLAN), Wireless Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), LTE-advanced (LTE-A) and others. The communication unit 110 may also communicate with an external terminal and other similar terminals by using short-range communication technologies, such as Bluetooth^{™}, Radio Frequency Identification (RFID), Infrared Data Association (IrDA), Ultra Wideband (UWB), ZigBee, and Near Field Communication (NFC).

The input unit 120 may include the camera 121 or an image input unit for inputting an image signal, the sound reception unit 122 or a microphone for inputting an audio signal, and a user input unit (not illustrated) (e.g., a touch key, a mechanical key, or a similar key) for receiving information as input from the user. Signal data, voice data, and image data, which are collected by the input unit 120, may be analyzed and processed as control commands.

The traveling-enabling unit 130 moves and rotates the main body of the guidance robot 100. To this end, the traveling-enabling unit 130 may be configured to include a plurality of wheels and a drive motor. The driving operation by the traveling-enabling unit 130 is controlled by the processor 180 based on a received control command. An alert may be provided through a light output unit 153, such as LEDs, before or after the driving operation.

The sensing unit 140 may include at least one sensor for sensing at least one of the following: information within the guidance robot, information about surrounding environments near the guidance robot, or user-related information. For example, the sensing unit 140 may include at least one of the following sensors: a proximity sensor 141, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (e.g., refer to the camera 121), a microphone, a battery gauge, an environment sensor (e.g., a barometer, a hygrometer, a thermometer, a radiation detection sensor, a heat detection sensor, a gas detection sensor, or a similar sensor), or a chemical sensor (e.g., an electronic nose, a health care sensor, a biometric sensor, or a similar sensor). The guidance robot disclosed in the present specification may be utilized by combining pieces of information obtained from sensing from at least two of these sensors. In addition, the sensing unit 140 may include a traveling-related sensor 142 that detects an obstacle, a floor condition, and other similar conditions.

Examples of the proximity sensor 141 may include a transmissive photoelectric sensor, a direct reflective photoelectric sensor, a mirror reflective photoelectric sensor, a high-frequency oscillation-type proximity sensor, a capacitance-type proximity sensor, a magnetic proximity sensor, an infrared proximity sensor, and other types of sensors. In addition, the proximity sensor 141 may include at least one of the following: a navigation camera, an ultrasonic sensor, a LiDAR, or a ToF sensor, and may recognize the approach and location of the detection target (e.g., the user) through this device.

In addition, the sensing unit 140 may include at least one sensor for collecting situational information. As an example, the sensing unit 140 may include one of or two or more of the following: a camera, a 3D depth camera, a LiDAR, a speed sensor, a distance sensor, an obstacle sensor, or the proximity sensor 141.

The sensing unit 140 may collect the situational information using one sensor or two or more sensors. At this point, examples of the collected situational information may include the presence or absence of a visitor within a space, the visitor's approach or departure, the visitor's direction of approach or departure, the robot's traveling speed during traveling, and features of a traveling space, and other similar conditions. In addition, examples of the situational information may include exterior features (e.g., gender, age, and similar attributes) of the approaching or departing visitor.

The situational information collected by the sensing unit 140 may be provided to the processor 180 or be stored in the memory 170.

The processor 180 may adjust the volume of an utterance, output through the sound output unit 152, in a manner that varies based on the collected situational information. More specifically, the processor 180 may subdivide the targets or purposes of the robot's utterances and establish utterance volume adjustment ranges, which correspond to the resulting sub-targets or sub-purposes, respectively, to be different from one another.

Based on the collected situational information, the processor 180 may select an utterance mode to adjust the volume of an utterance within a first setting range or within a second setting range different from the first setting range.

At this point, the maximum value within the first setting range may be higher than the maximum value within the second setting range. For example, for the first setting range, an utterance mode ('public utterance mode') for utterance targeting many persons may be selected, and for the second setting range, an utterance mode ('individual utterance mode') for utterance targeting a specific individual approaching the robot may be selected.

In a case where the displays 151, that is, front- and rear-surface displays, are provided on the front and rear surface, respectively, of the body, the processor 180 may control the front- and rear-surface displays in such a manner that different content items (e.g., different advertisements) are displayed on them. In this case, based on the collected situational information, the processor 180 may control the sound output unit 152 in such a manner as to output sound associated with one display that produces a greater advertising effect, displays more significant safety-related information, or requires a higher control priority than the other display.

The output unit 150 serves to generate outputs associated with a sense such as sight, hearing, or touch. The output unit 150 may include at least one of the following: the display 151, the sound output module 152, or the light output module 153. The display 151 may be configured to have an inter-layered structure or an integrated structure incorporating a touch sensor and thus be realized as a touchscreen. The touchscreen may function as a user input unit, which provides an input interface between the guidance robot 100 and the user, and further provide an output interface.

The light output unit 153 outputs a signal for alerting the user to the occurrence of an event in the guidance robot 100, using light emitted by a light source. For example, in a case where a movement command is transferred to the traveling-enabling unit 130 of the guidance robot 100, a signal for alerting the user to the movement of the guidance robot 100 is output through the light output unit 153.

The processor 180 may include an AI learning unit 181 (not illustrated) to perform operations associated with artificial intelligence technologies for the guidance robot. The AI learning unit 181 may be configured to receive, classify, store, and output information that is used for data mining, data analysis, intelligent decision-making, and machine learning algorithms and technologies. The AI learning unit 181 may include one or more memory units. Each memory unit is configured to store information that is received, sensed, detected, generated, or predefined through the guidance robot, or information that is output in other ways through the guidance robot. Alternatively, each memory is configured to store data that is received, sensed, detected, generated, predefined, or output by another constituent element, an apparatus, and a terminal.

In one embodiment, the AI learning unit 181 may be integrated into the guidance robot or include the memory. In one embodiment, the AI learning unit 181 may be realized through the memory 170. However, the AI learning unit 181 is not limited thereto. The AL learning unit 181 may be realized either in an external memory associated with the guidance robot 100 or through a memory included in a server capable of communicating with the guidance robot 100. In another embodiment, the AI learning unit 181 may be realized through a memory maintained under a cloud computing environment or a remote memory accessible by the guidance robot through a communication technique such as over a network.

The AI learning unit 181 is configured to store data in one or more databases for purposes such as identification, indexation, classification, manipulation, storage, search and output. The data are typically used for supervised or unsupervised learning, data mining, prediction analysis, or other machine learning technologies. The information stored in the AI learning unit 181 may be used by the processor 180 or by a plurality of processors included in the guidance robot. The processor 180 or the plurality of processors uses at least one of the following: analysis of different data types, machine learning algorithms, and machine learning technologies. Examples of these algorithms and techniques include k-Nearest neighbor systems, fuzzy logic (e.g., possibility theory), neural networks, Boltzmann machines, vector quantization, pulsed neural nets, support vector machines, maximum margin classifiers, hill-climbing, inductive logic systems, Baysian networks, Petri nets (e.g., finite state machines, Mealy machines, and Moore finite state machines), classifier trees (e.g., perceptron trees, support vector trees, Markov trees, decision tree forests, and random forests), pandemonium models and systems, clustering, artificially intelligent planning, artificially intelligent forecasting, data fusion, sensor fusion, image fusion, reinforcement learning, augmented reality, pattern recognition, automated planning, and other similar approaches.

The processor 180 may determine or predict executable operations of the guidance robot based on information that is determined or generated using data analysis, machine learning algorithms, and machine learning technologies. To this end, the processor 180 may request, search for, receive, or utilize the data stored in the AI learning unit 181. The processor 180 may perform various functions, such as realizing a knowledge-based system, an inference system, and a knowledge acquirement system. Furthermore, the processor 180 may perform various functions, such as realizing a system (e.g., a fuzzy logic system) for inference under uncertainty, an adaptive system, a machine learning system, and an artificial intelligence network.

In addition, the processor 180 may include sub-modules, enabling voice and natural language processing, such as an I/O processing module, an environmental condition module, a voice-text (STT) processing module, a natural language processing module, an operation flow processing module, and a service processing module. In the guidance robot, each of the sub-modules may have the authority to access one or more systems, to access data and models, or to access their subsets or supersets. At this point, objects that each of the sub-modules has the authority to access may include scheduling, a vocabulary index, user data, a task flow model, a service model, and an automatic speech recognition (ASR) system.

In some embodiments, the processor 180 may also be configured to sense and detect a user request by analyzing a contextual condition or the user's intention, which is expressed through user's input or natural language input, based on the data stored in the AI learning unit 181. When an operation of the guidance robot is determined based on data analysis conducted by the AI learning unit 181, machine learning algorithms, and machine learning technologies, the processor 180 may control the constituent elements of the guidance robot to perform the determined operation. The processor 180 may perform the determined operation by controlling the guidance robot based on a control command.

The memory 170 stores data that support various functions of the guidance robot 100. The memory 170 may store a multiplicity of application programs (or applications) executed on the guidance robot 100, and data and commands for operating the guidance robot 100. In addition, the memory 170 may store a variable call word used for enabling a function of conducting a voice conversation with the user.

The memory 170 may store situational information and data that are collected by the guidance robot 100 through the sensing unit 140, the input unit 120, the communication unit 110, and other similar units. In addition, the situational information and the data, which are stored in the memory, may be provided to the processor 180.

Example of the memory 170 may include at least one of the following types of storage media: flash memory, hard disk, a Solid State Disk (SSD), Silicon Disk Drive (SDD), a multimedia card micro type, a card-type memory (e.g., SD or DX memory), Random Access Memory (RAM), Static Random Access Memory (SRAM), Read-Only Memory (ROM), Electrically Erasable Programmable Read-Only Memory (EEPROM), Programmable Read-Only memory (PROM), magnetic memory, magnetic disk, or optical disk.

The processor 180 typically controls the overall operation of the guidance robot 100 in addition to operations associated with the application program. The processor 180 may process signals, data, information, and other similar elements that are input or output through the constituent elements described above, execute application programs stored in the memory 170, or control the traveling-enabling unit 130. By doing so, the processor 180 may provide information appropriate for the user or perform functions appropriate for the user.

Under the control of the processor 180, the power supply unit 190 is internally or externally supplied with electric power and distributes the electric power to the constituent elements included in the guidance robot 100. The power supply unit 190 may include a battery. The battery may be an internal battery or a replaceable battery.

At least some of the constituent elements may cooperate to operate or control the guidance robot or to implement a method of controlling the guidance robot, as described below in various embodiments. In addition, the operating or controlling of the guidance robot, or the method of controlling the guidance robot may be performed in the guidance robot by executing at least one application program stored in the memory 170.

Various embodiments disclosed below may, for example, be implemented on a recording medium readable by a computer or a similar apparatus, using software, hardware, or any combination thereof.

A guidance robot capable of autonomously traveling and delivering an utterance with the volume being adjusted and a method of operating the guidance robot are described in detail below according to an embodiment of the present disclosure.

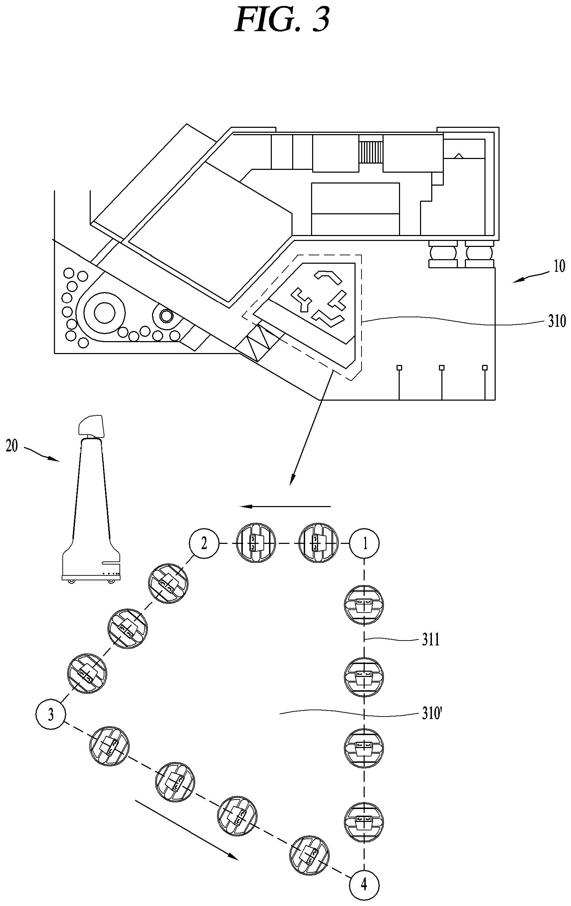

First, FIG. 3 is a view that is referenced to describe a surveillance function of a general guidance robot. With reference to FIG. 3, when the surveillance function is performed for a surveillance area 310 within a predetermined space 10, a guidance robot 20 in the related art operates to perform camera monitoring while traveling along the border of the established surveillance area 310 in a predetermined direction (e.g., counterclockwise direction).

Specifically, when a manager sets boundary vertices 1, 2, 3, and 4 of the surveillance area 310 as POIs, the guidance robot sets a traveling path 311 so that the guidance robot sequentially passes through these POIs 1, 2, 3, and 4. Then, the guidance robot performs the surveillance function while repeatedly traveling through these POIs 1, 2, 3, and 4.

This means that the monitoring of one portion of the interior region 310' of the surveillance area 310 and one portion of the exterior region thereof is not performed, thereby reducing the effectiveness of monitoring. Particularly, as the size of the surveillance area 310 increases and/or in a case where a blind spot (e.g., a blind spot or a similar obstruction caused by a pillar) is present, the effectiveness of monitoring is further reduced, thereby making normal monitoring of the surveillance area 310 unfeasible. In addition, since the monitored area changes based on the traveling direction of the guidance robot, it is difficult for the manager to establish the traveling path in advance while considering all these factors.

To address this problem, according to the present disclosure, a guidance robot is realized that utilizes its autonomous traveling and ever-improving intelligence capabilities and thus is capable of performing efficient surveillance suitably for its current state and the characteristics of its traveling space and of performing surveillance while adaptively varying its traveling path.

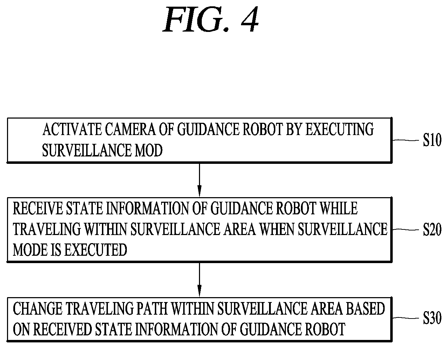

FIG. 4 is a representative flowchart that is referenced to describe the method of operating the guidance robot according to the present disclosure. Unless stated otherwise, each step in FIG. 4 is performed by the processor 180 of the guidance robot 100. In addition, a process in FIG. 4 may be repeated while the guidance robot 100 performs the surveillance function. In addition, although not illustrated in detail, the guidance robot 100 may perform AI learning, updates, and/or database construction based on the results of monitoring the surveillance area through the process in FIG. 4.

With reference to FIG. 4, first, the guidance robot 100 may execute a surveillance mode by activating a camera (S10).

The cameras here may include not only general cameras but also cameras for specialized surveillance, such as a depth camera, a 2D camera, a 3D camera, and a thermal imaging camera. In addition, the camera may be activated to perform an always-on recording function in accordance with the execution of the surveillance mode by the guidance robot.

When the surveillance mode is executed in this manner, the guidance robot may receive its state information that is collected while traveling within the surveillance area (S20).

At this point, the state information of the guidance robot refers to the state data of the guidance robot that has an influence on the performance of the surveillance function by the guidance robot. For example, the state information may include one or more of the following: the remaining battery charge of the guidance robot, the estimated time required to monitor the entire surveillance area, and the presence of another cooperative guidance robot.

The state information of the guidance robot may be collected or acquired through a state information-related sensor 143 (e.g., a battery level detection sensor, a work time measurement sensor, or a similar sensor), which is included in the sensing unit 140 of the guidance robot 100, the communication unit 110, or the input unit 120, such as the camera 121 or the sound reception unit 122.

The collected or acquired state information of the guidance robot may be stored in the memory 170, transmitted externally through the communication unit 110, or transferred to the processor 180 for performing an associated operation or for AI learning, and/or may be visualized through the display 151.

Next, based on the received or acquired state information of the guidance robot, the guidance robot 100 may change its traveling path within the surveillance area (S30).

At this point, changing (or setting differently) the traveling path may include both adaptively changing the existing traveling path and newly establishing the traveling path based on the state information of the guidance robot.

In the case of the former, an adaptive change to the existing traveling path can be recorded. In addition, when the state data of the guidance robot is restored to its original value, the guidance robot may operate to perform surveillance while traveling along the existing traveling path. In the case of the latter, map data generation and learning for the new traveling path may be performed. In addition, even when the state data of the guidance robot is restored to its original state, the traveling path for surveillance may continue to be generated based on the state data acquired in real time.

Specifically, the processor 180 of the guidance robot 100 may change/establish a reference POI for monitoring in a manner that varies depending on the received or acquired state information of the guidance robot.

Alternatively, the processor 180 of the guidance robot 100 may determine a surveillance target based on the received or acquired state information of the guidance robot and establish a traveling path for tracking the surveillance target.

Alternatively, when the remaining battery charge is determined to be insufficient to monitor the entire surveillance area based on the received or obtained state information of the guidance robot, the processor 180 of the guidance robot 100 may establish the traveling path in such a manner that the guidance robot travels only within security-critical locations or narrow areas that are selected according to a predetermined reference.

Next, examples illustrating how the traveling path for surveillance changes based on specific state data of the guidance robot are described.

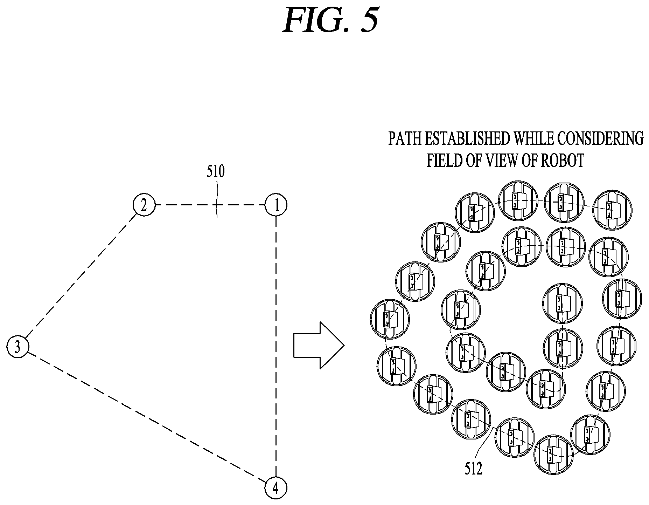

FIG. 5 is a view illustrating that the guidance robot according to the present disclosure performs the surveillance function while considering the camera's field of view.

When the surveillance function of the guidance robot 100 is performed, the camera 121 is activated for environmental monitoring and operates in the surveillance mode. The guidance robot 100, while traveling a designated surveillance area in the surveillance mode, needs to check the entire surveillance area in accordance with the field of view of the camera that monitors the surroundings.

Thus, the processor 180 of the guidance robot 100 may determine the traveling path for surveillance based on the field of view of the activated camera 121 to monitor the entire surveillance area.

With reference to FIG. 5, a spiral-shaped traveling path 512 directed inward from the border of a designated surveillance area 510 may be established to cover the entire interior region of the designated surveillance area 510 while considering the field of view of the camera of the guidance robot 100, thereby enabling the execution of the surveillance mode. That is, the border of the surveillance area is formed by connecting a plurality of POIs, for example, POIs 1, 2, 3, and 4, which are established by the manager, and the guidance robot 100 travels inward from the border, covering the entire interior space.

Subsequently, when the guidance robot 100 is positioned at the center of the surveillance area 510, the guidance robot 100 may execute the surveillance mode while tracing a spiral-shaped traveling path outward from the center of the surveillance area 510 toward the border in the opposite direction of the inward path. This process may be repeated until the surveillance function is deactivated for the surveillance area 510.

The spiral-shaped traveling path 512 is an exemplary path for covering the entire surveillance area 510 while considering the camera's angle of view. Therefore, a differently shaped path, for example, a zigzag-shaped path, may also be possible.

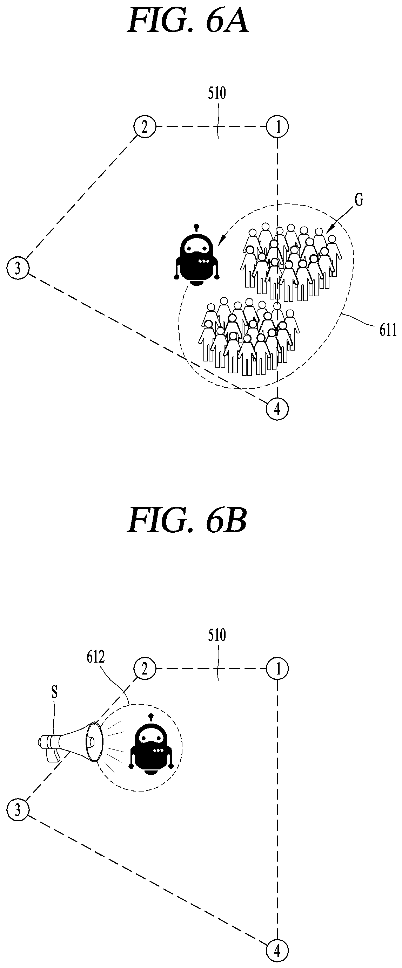

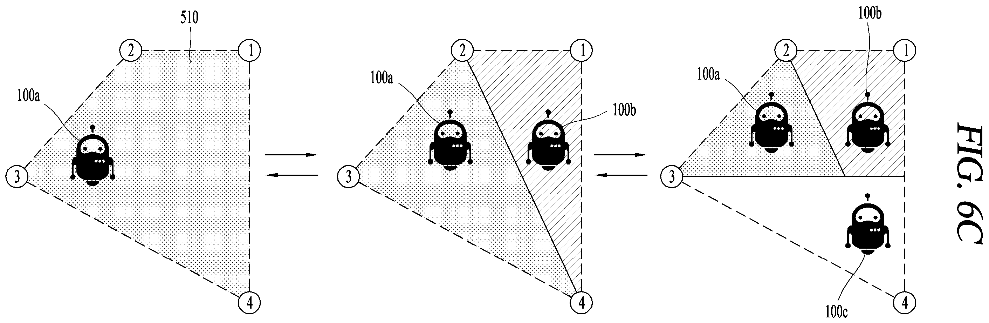

As another embodiment, examples in which the traveling path within the surveillance area is established in a manner that varies based on different states of the guidance robot are described with reference to FIGS. 6A, 6B, and 6C. Specifically, these examples cover cases where the remaining battery charge is insufficient and where another cooperative guidance robot is present.

The guidance robot 100 according to the present disclosure may establish the traveling path within the surveillance area while considering the remaining travel time computed based on the remaining battery charge.

When the guidance robot 100 operates in the surveillance mode or while the guidance robot 100 performs a surveillance-mode operation, if the remaining battery charge of the guidance robot 100 is determined to be insufficient, the guidance robot 100 may execute the surveillance function in a power-saving mode. This is because the guidance robot 100 consumes the largest amount of battery power due to its size while traveling.

However, even when the remaining battery charge of the guidance robot 100 is at or below a reference value, if a comparison of the remaining battery charge with the remaining work time indicates that the estimated time required to monitor the surveillance area is short (that is, if surveillance is predicted to be soon finished), the guidance robot 100 may continue performing the surveillance function without switching to the power-saving mode.

When performing the surveillance function in the power-saving mode, it would be advantageous for the guidance robot 100 to position itself in a place that can maximize security effectiveness while minimizing travel distance, for example, a location with the highest visibility. Alternatively, the guidance robot 100 may also continue to perform the surveillance function while staying at the location determined to have the highest visibility, without movement.

According to an embodiment, the processor 180 of the guidance robot 100 may determine a place where many visitors gather or a specific location with high foot traffic (e.g., around a door, near a restroom, around an event venue, and other similar locations) as a high-visibility location and control the guidance robot 100 in such a manner as to move to this place or location. Alternatively, according to an embodiment, the processor 180 of the guidance robot 100 may also perform the surveillance function after moving to a location or direction where a sound with a decibel (db) level reaching or exceeding a reference value occurs.

The guidance robot 100 compares the remaining battery charge with the estimated time required to monitor the entire surveillance area. When the remaining battery charge is determined to be insufficient, the guidance robot 100 may operate in the surveillance mode while in the power-saving mode (after stopping travel) while considering the remaining travel time.

To this end, the processor 180 of the guidance robot 100 may execute the power-saving mode based on the remaining battery charge of the guidance robot. When the power-saving mode is executed, the processor 180 may allow the guidance robot 100 to move to a specific location within the surveillance area by controlling the traveling-enabling unit 130 and monitor the surveillance area.

Thereafter, the guidance robot 100 stops traveling and monitors the surveillance area either from the location to which it has moved or along a short traveling path generated based on the location to which it has moved.

At this point, the specific location may vary depending on the situational information collected in the surveillance area. The situational information here may include state data collected (e.g., visitor density, sound, and the like) within the surveillance area through a sensor or another component that is mounted on the guidance robot and/or environmental data (e.g., a temperature condition related to heating or cooling, humidity, a floor condition, and other similar factors).

FIG. 6A illustrates that the specific location is determined based on the visitor density within the surveillance area, which is used as the situational information.

As illustrated in FIG. 6A, in a case where the plurality of POIs, for example, the POIs 1, 2, 3, and 4, are established for the surveillance area 510 and where the power-saving mode is executed in a situation where the remaining battery charge is insufficient, a location or an area G with high visitor density within the surveillance area 510 may be detected through a camera or a server operating in conjunction with the guidance robot. Then, a short traveling path 611 may be established based on the location or the area. Alternatively, the guidance robot may perform the surveillance function while staying at an arbitrary point (for example, the POI 4) within the location or the area G.

FIG. 6B illustrates that the specific location is determined by detecting a sound/noise with a decibel (dB) level reaching or exceeding the reference value within the surveillance area, which is used as the situational information.

As illustrated in FIG. 6B, in the case where the plurality of POS, for example, the POIs 1, 2, 3, and 4, are established for the surveillance area 510 and where the power-saving mode is executed in a situation where the remaining battery charge is insufficient, a location or an area S where a sound/noise with a decibel level reaching or exceeding the reference value within the surveillance area 510, which is collected through the sound reception unit 122 of the guidance robot 100, for example, the microphone, may be detected. Then, a short traveling path 612 may be established based on the location or the area. Alternatively, the guidance robot may perform the surveillance function while staying at an arbitrary point (for example, the POI 2) within the location or the area S.

According to an embodiment, in some cases, a plurality of the guidance robots may perform monitoring of the surveillance area. In a case where the plurality of the guidance robots monitors one surveillance area in a distributed manner, adaptively changing the traveling path for surveillance is also efficient.

Accordingly, the guidance robot 100 according to the present disclosure may change its travel path within the surveillance area based on the presence of another cooperative guidance robot and/or reception of a request for cooperation.

Specifically, the processor 180 of the guidance robot 100 may determine the traveling path within the surveillance area in a manner that varies depending on the number of cooperative guidance robots. To this end, the guidance robot 100 may communicate with another collaborative robot and receive cooperative schedule information for the same surveillance area established by the manager from the manager's terminal or a management server.

At this point, the collaborative schedule information for the surveillance area may include information concerning the number of collaborative robots and the collaborative work time.

For example, as the number of collaborative robots increases, the surveillance area becomes further subdivided, and the traveling path along which each guidance robot needs to travel for surveillance also becomes shorter.

In addition, for example, a collaborative schedule may be established in a manner that varies on a time-period basis. For example, at 1 PM, one guidance robot may be scheduled to keep the surveillance area under surveillance. At 5 PM, the current guidance robot may travel back, and another guidance robot may be scheduled to take over surveillance. At 2 PM, two guidance robots may be scheduled to cooperatively keep the surveillance area under surveillance. At 4 PM, one of the current two guidance robots may be replaced with another guidance robot. At 3 PM, an additional guidance robot may be added, and a total of three guidance robots may be scheduled to keep the surveillance area under surveillance.

With reference to FIG. 6C, when comparing the case where one guidance robot 100a keeps the surveillance area 510 under surveillance with the case where two guidance robots 100a and 100b and with the case where three guidance robots 100a, 100b, and 100c keep the surveillance area 510 under surveillance, it may be predicted that as the surveillance area is divided into smaller-sized sections, the traveling paths for surveillance will also be established to be shorter.

In another embodiment, in the power-saving mode, the guidance robot may request a nearby guidance robot or the manager to dispatch a cooperative guidance robot. While performing the surveillance function from the specific location, the guidance robot operating in the power-saving mode may respond to the nearby guidance robot approaching the surveillance area at the request of the guidance robot. Then, the guidance robot may return to a charging station.

As described above, the guidance robot according to the present disclosure may actively establish the traveling path within the surveillance area based on various types of state information, such as the remaining battery charge, the estimated time required to monitor the entire surveillance area, and the presence of another cooperative guidance robot, while considering the field of view of a surveillance camera.

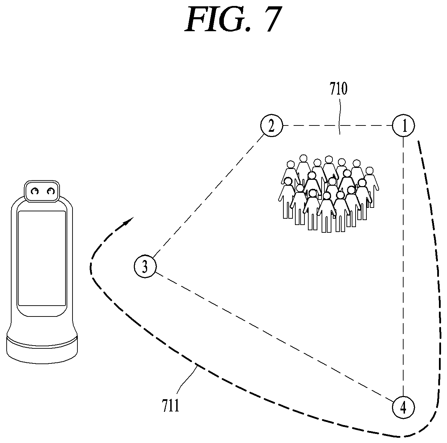

FIGS. 7, 8A, 8B, 9, and 10 are views illustrating examples in which the guidance robot according to the present disclosure, while traveling within the surveillance area, recognizes the occurrence of a surveillance target and performs a corresponding operation.

As described above, surveillance is not highly effective in a case where the surveillance is performed either from a fixed location or along a fixed traveling path. To address this issue, the process of establishing the traveling path more efficiently within a designated surveillance area is described above. Next, examples in which a problem occurrence event within the surveillance area is recognized and tracking is performed to handle the problem occurrence event are described.

The problem occurrence event here is detected within the surveillance area, but the tracking may also be performed outside the surveillance area. When the event is handled through the tracking, the guidance robot 100 according to the present disclosure returns to the surveillance area and resumes its surveillance function.

Through the detection and tracking of the problem occurrence event, the guidance robot 100 may monitor a predicted problematic situation more effectively and prevent a possibly occurring problem in advance by appropriately handling it.

Specifically, according to an embodiment, the processor 180 of the guidance robot 100 may recognize the occurrence of a pre-established surveillance event (or the problem occurrence event) while the guidance robot 100 travels within the surveillance area, perform an operation corresponding to the recognized surveillance event, and then resume monitoring the surveillance area.

The pre-established surveillance event here may refer to a situational context associated with at least one of the following: visitor condition surveillance, visitor surveillance for epidemic prevention, protected area surveillance, or in-building condition surveillance.

For example, the visitor condition surveillance may include lost child surveillance, guidance-needed visitor surveillance, pet surveillance, and similar operations.

Specifically, when the guidance robot 100 detects a child crying alone through the camera, the guidance robot 100 may recognize this as a situational context requiring the lost child surveillance, independently approach the child, and display a parent-finding screen or a similar screen on the display 151. In addition, in a case where a visitor is found repeatedly looking around within the surveillance area, the guidance robot 100 may perceive this as a situational context requiring the guidance-needed visitor surveillance, approach the visitor, and utter pre-established guidance voice (e.g., 'How may I help you?'). In addition, when a pet that does not have a leash around the neck or a pet that is likely to approach a NO-PET ZONE is detected through the camera, the guidance robot 100 may recognize this as a situational context requiring the pet surveillance and perform a corresponding operation, such as providing voice guidance or positioning itself to block the dog's approach.

In addition, for example, the visitor surveillance for epidemic prevention may include measuring the visitor's body temperature, surveillance to ensure compliance with epidemic prevention standards, and other preventive actions.

Specifically, when detecting visitor-crowed areas, the guidance robot 100 may measure visitors' body temperatures by monitoring their faces through a thermal imaging camera or a similar camera or detect visitors not wearing an epidemic prevention mask through the camera. Then, the guidance robot 100 may track visitors subject to surveillance and provide guidance on the display 151, prompting them to take feedback actions (e.g., wearing a mask, notifying the manager, or taking a similar action).

In addition, for example, the protected area surveillance may include surveillance to restrict approach/close approach to a protection target, surveillance to restrict approach to an entry -prohibited/restricted area, and surveillance to restrict approach to other similar areas.

Specifically, in a case where a child approaches or runs around an artwork in an art museum, the guidance robot 100 may recognize this as a situational context requiring surveillance to restrict the approach/close approach to the protection target, approach the protection target, and perform surveillance through the camera whether the child comes too close to the protection target. If the child does, the guidance robot 100 may perform a corresponding operation, such as issuing a warning or positioning itself to block the child's approach. In addition, the guidance robot 100 may recognize the movement direction of a visitor, who is monitored through the camera and map data of the surveillance area, as a situational context requiring surveillance to restrict the approach to the entry-prohibited/restricted area. Then, the guidance robot 100 may issue a warning about the approach through voice guidance or a similar auditory alert.

In addition, for example, the in-building condition surveillance may include slip surveillance, cleaning state surveillance, damaged state surveillance, and similar condition surveillance.

Specifically, the guidance robot 100 may recognize the entrance of a building on a rainy day, where slipping is predicted, and the entrance of a restroom as situational contexts requiring the slip surveillance and may issue a warning about the floor condition (e.g., water accumulation or a similar hazard) to a visitor through sound, guidance voice, or a similar auditory alert.

With reference to FIGS. 7 to 9, the visitor surveillance for epidemic prevention, which the guidance robot 100 performs as the problem occurrence event while monitoring the surveillance area, is described, along with subsequent tracking and the corresponding operation .

As illustrated in FIG. 7, the guidance robot 100 may repeatedly travel through established POIs 1, 2, 3, and 4 in order (711). While operating in the surveillance mode for a surveillance area 710, the guidance robot 100 may recognize a situational context signifying the gathering of many visitors and start the visitor surveillance for epidemic prevention.

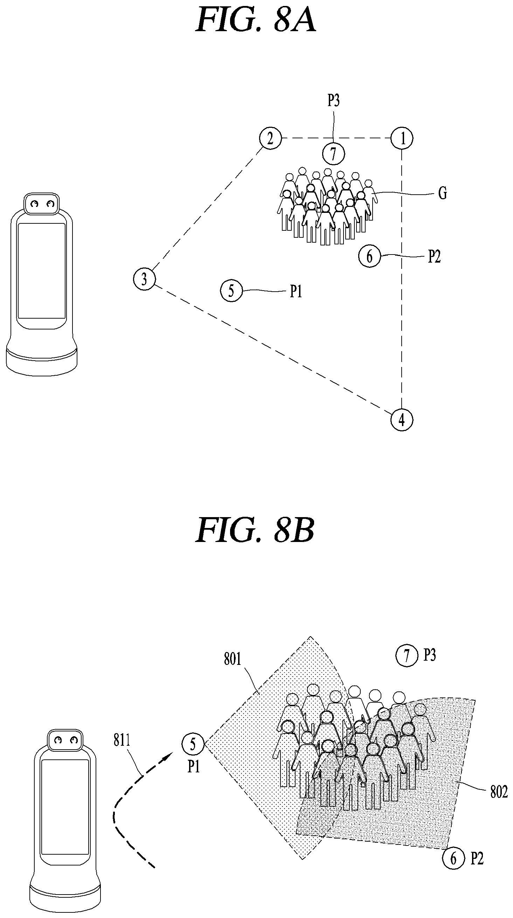

Then, as illustrated in FIG. 8A, surveillance POIs 5, 6, and 7 are established to perform visitor surveillance for epidemic prevention (e.g., temperature measurement, checking compliance with mask-wearing, and similar operations) as the problem occurrence event. The guidance robot 100 may compute coordinates P1, P2, and P3 of a new POI based on its current location.

At this point, information necessary to compute the surveillance POI may include information about a crowded location, distance information based on the resolution of a camera (e.g., a general camera or a thermal imaging camera), and information about the camera's field of view.

Now, the guidance robot 100, as illustrated in FIG. 8B, moves to the first location P1 of the newly established surveillance POIs, rather than the previously established POIs 1, 2, 3, and 4 (811) and performs monitoring for the visitor surveillance for epidemic prevention. The guidance robot 100 performs the visitor surveillance for epidemic prevention within a field of view 801 from the fifth location and then moves to the sixth location P2. Thereafter, the guidance robot 100 may perform the visitor surveillance for epidemic prevention within a field of view 802 from the sixth location and then move to the seventh location P3.

That is, the processor 180 of the guidance robot 100 may compute a POI location for performing an operation corresponding to the recognized surveillance event based on a location where the situational context occurs and may establish the next traveling path based on the computed POI location and the current location of the guidance robot.

When the result of monitoring the surveillance event or the problem occurrence event indicates no abnormality, the guidance robot 100 may move to one of the previously established POIs 1, 2, 3, and 4 based on its current location and execute the surveillance mode.

In a case where the result of monitoring the surveillance event or the problem occurrence event indicates the presence of an abnormality, the guidance robot 100 operates as follows.

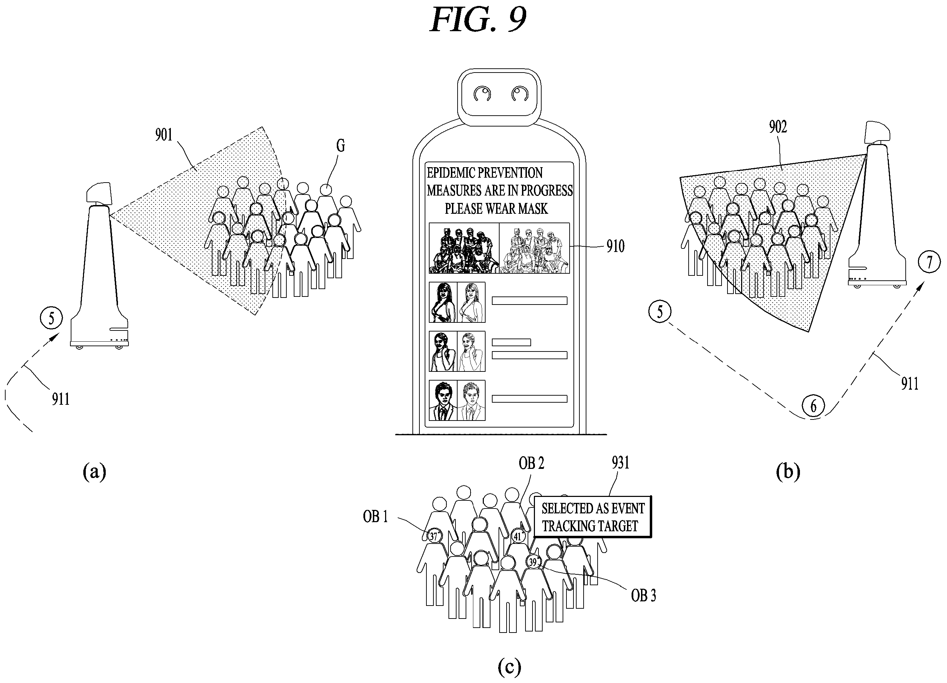

As illustrated in (a) and (c) of FIG. 9, the guidance robot 100 may sequentially visit the newly established POI locations 5, 6, and 7 for the health surveillance of a visitor G for epidemic prevention (911) and perform thermal measurement monitoring within fields of view 901 and 902 at each location. Then, as illustrated in (c) of FIG. 9, the guidance robot 100 may identify one or more persons subject to surveillance, such as OB1, OB2, and OB3, and then select OB3 with a high score (e.g., a person not wearing a mask or showing a high thermal measurement result) from among them as a person 931 subject to tracking.

The guidance robot 100 may display information 910 concerning the identified persons OB1, OB2, and OB3 subject to surveillance and the person 931 subject to tracking on the display 151. At this point, the displayed information 910 may include a feedback action and a response request for the person 931 subject to tracking.

According to an embodiment, the guidance robot 100 may approach the person 931 subject to tracking. Then, while following the movement of the person 931, the guidance robot 100 may provide guidance voice, prompting the person 931 to take a feedback action (e.g., wearing a mask, notifying the manager, moving out of a building, or taking a similar action), or issue a verbal warning to persons in the vicinity of a movement path of the person 931.

At this point, the guidance robot 100 may continue tracking the person 931 subject to tracking even when outside the surveillance area.

When it is identified that the person 931 subject to tracking has performed the feedback action, the guidance robot 100 returns to the surveillance area and resumes monitoring the surveillance area along the traveling path changed based on the existing traveling path or the state information of the robot.

When it is identified that the person 931 subject to tracking has not performed the feedback action within a predetermined time, the guidance robot 100 may transmit this fact to a terminal of the manager or another designated recipient and initiate a call.

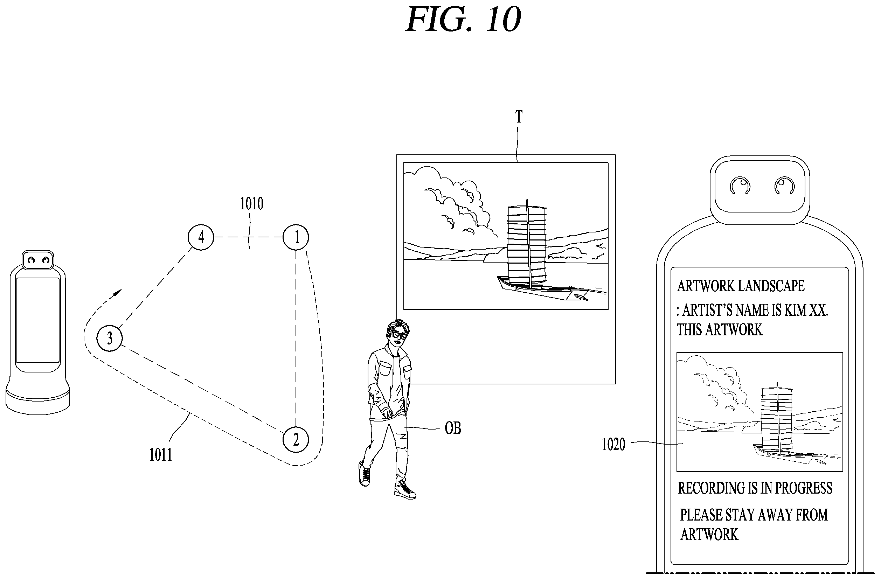

With reference to FIG. 10, surveillance to restrict the approach/close approach to the protection target, which the guidance robot 100 performs as the problem occurrence event while monitoring the surveillance area, is described, along with subsequent tracking and a corresponding operation.

A surveillance area 1010 may be established as a predetermined space within a gallery or art museum where expensive artworks and exhibits are displayed. In this case, when a situational context signifying that a child approaches an expensive artwork or exhibit is recognized, tracking and a corresponding operation may be performed for surveillance to restrict the approach/close approach to the protection target.

In FIG. 10, the guidance robot 100 operates in the surveillance mode while repeatedly traveling through the established POIs 1, 2, 3, and 4 within the surveillance area 1010. During this process, when a situational context signifying that a visitor (e.g., a child) OB approaches a protection target (e.g., an artwork) T is recognized through the camera or a similar sensor, the guidance robot 100 may move to a location close to the protection target T and perform tracking of the visitor OB.

To this end, although not illustrated, a surveillance POI, where the distance between the protection target T and the visitor OB subject to tracking can be measured, may be computed, and the guidance robot 100 may move to the computed surveillance POI.

Thereafter, the guidance robot 100 may output a warning alert about the approach by the visitor OB, who is subject to tracking, through the display 151 and/or the sound output unit. In addition, the guidance robot 100 may record and store video corresponding to tracking through the camera while tracking is performed. In addition, in a case where the visitor OB subject to tracking ignores the warning alert and continues approaching the protection target T, the guidance robot 100 may progressively intensify the warning alert in inverse proportion to the distance between the protection target T and the visitor OB subject to tracking. In a case where the visitor OB causes damage to the target T and leaves the area, the guidance robot 100 may immediately transmit an alert and recorded video to a terminal of the manager or another designated recipient while outputting an intensified warning sound.

In this manner, the guidance robot according to the present disclosure is capable of performing segmented or specialized surveillance, such as epidemic prevention or protected area surveillance, and performing tracking of an associated target and an appropriate corresponding operation when a problem occurrence event takes place.

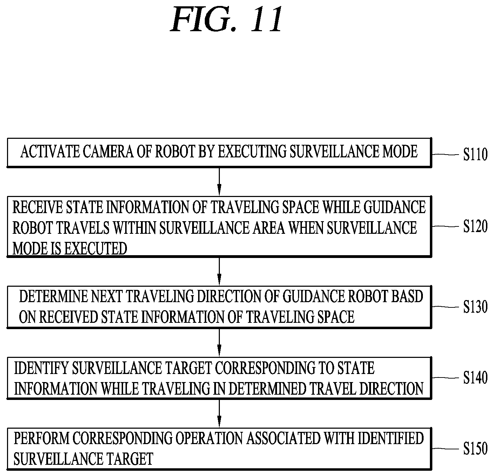

FIG. 11 is a flowchart that is referenced to describe the method of operating the wearable device according to the present disclosure. Unless otherwise described, each step in FIG. 11 is performed by the processor 180 of the guidance robot 100, as in FIG. 4. In addition, a process in FIG. 11 may be repeatedly performed while the guidance robot 100 performs a surveillance function, and the guidance robot 100 may perform AI learning, updates, and/or database construction based on the monitoring results of the surveillance area through the process in FIG. 11.

With reference to FIG. 11, the guidance robot 100 may first activate the camera and execute the surveillance mode either based on input or by its determination (S110).

The cameras here may include not only general cameras but also cameras for specialized monitoring, such as a depth camera, a 2D camera, a 3D camera, and a thermal imaging camera. In addition, the camera may be activated to perform an always-on recording function in accordance with the execution of the surveillance mode by the guidance robot.

When the surveillance mode is executed, the guidance robot 100 may receive or acquire state information of the traveling space while traveling within the surveillance area (S120).

At this point, the state information of the traveling space may refer to state data and environmental data associated with detection of an abnormality within the traveling space.

In addition, the state data may include data associated with the floor conditions (e.g., potholes, slippery surfaces, and inclined surfaces) in the traveling space and data associated with the conditions of a structure (e.g., structural damage and related structural issues). The environmental data may include information associated with a temperature condition associated with cooling or heating, humidity, a congestion level, and a noise level in the traveling space.

This state information of the traveling space may be received in various forms through various routes, including, for example, the state information-related sensor 143 of the sensing unit 140 of the guidance robot, an inclination detection sensor 144 (e.g., an IMU sensor), an environment sensor, such as a temperature sensor or a humidity sensor, the communication unit 110, the camera 121, and/or the sound reception unit 122 for acquiring ambient sound.

Subsequently, the guidance robot 100 may determine the next traveling direction based on the received state information of the traveling space (S130).

According to an embodiment, the next traveling direction of the guidance robot may be determined in the direction associated with a point where an abnormality is detected as a result of analyzing the received state data of the traveling space.

Next, the guidance robot 100 may identify the surveillance target, which corresponds to the state information of the traveling space that is collected while traveling in the traveling direction determined in this manner (S140) and may perform a corresponding operation associated with the identified surveillance target (S150).

Specifically, the guidance robot 100 may check temperature conditions associated with cooling and heating in the traveling space while traveling within the surveillance area for monitoring, thereby detecting an abnormality associated with cooling or heating. Then, the guidance robot 100 may track the next path based on the location where the abnormality is detected and thus detect the location that causes the occurrence of thermal loss.

Alternatively, while traveling within the surveillance area for monitoring, the guidance robot 100 may detect abnormalities, such as potholes in the floor, slippery surfaces, and inclined surfaces, thereby constructing a database based on the detected abnormalities, or may track a plurality of different points based on the location where the abnormality is detected, thereby constructing a database based on the tracked points. Then, the guidance robot 100 may transmit these databases to the terminal of the manager or another designated recipient.

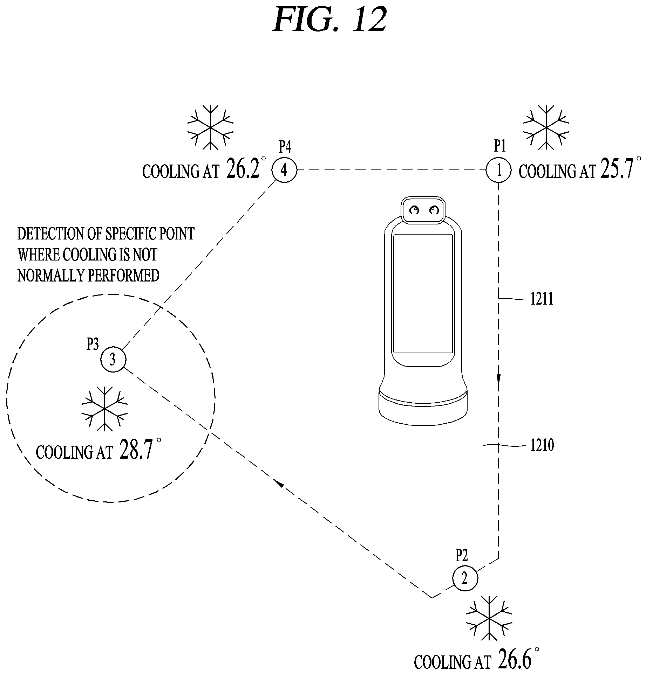

FIGS. 12, 13, and 14 are views that are referenced to describe a method of enabling the guidance robot 100 to detect an abnormality in a cooled or heated state and identify the surveillance target while traveling within the surveillance area for monitoring and corresponding operations associated with this method.

With reference to FIG. 12, the guidance robot 100 may sequentially visit a plurality of established POIs, for example, established POIs 1, 2, 3, and 4, which have coordinates P1, P2, P3, and P4 (1211), respectively, to monitor a surveillance area 1210. During monitoring, the guidance robot 100 may measure temperature associated with cooling or heating, as the state information of the traveling space. At this point, measuring the temperature associated with cooling or heating may be conducted using the temperature sensor included in the guidance robot 100 or through communication with temperature measurement devices installed in the vicinity of the plurality of POIs 1, 2, 3, and 4.

The detection of the abnormality associated with cooling or heating may be triggered based on either a visitor's voice (e.g., 'It's too hot' or a similar expression), which is acquired through the microphone, or visitor actions (e.g., one or more persons fanning themselves with their hands or objects or taking off outer layers of clothing) that are observed through the camera.

The temperature value measured at a specific POI (POI 3) is compared with the temperature values measured at the other POIs (POIs 1, 2, and 4). When the result of the comparison indicates an abnormal state in which a temperature difference between the specific POI and each of the other POIs reaches or exceeds a predetermined range (e.g., an abnormal state in which there is a difference of two degrees or more between the temperature value of the specific POI and the minimum or maximum temperature value of each of the other POIs), the coordinate P3 of the specific POI is determined to be the location where the abnormality is detected.

Thereafter, the guidance robot 100 newly determines the next traveling direction based on the location P3 where the abnormality is detected, without moving back to (revisiting) the first location to monitor the monitoring area 1210. The reason for this is to find a path to a source of heat loss and the cause of the heat loss.

The guidance robot 100 may compute a search POI for searching for either a location at which the abnormality associated with cooling or heating is detected or a point at which heat loss occurs.

In other words, the guidance robot 100 may acquire information about a predicted point (e.g., door and/or window locations) at which the heat loss occurs, which is based on the temperature values of a plurality of locations within the traveling space (encompassing all portions or a spatial portion of a building that is outside the surveillance area), and on the map data, and ascertain the path to the source of the heat loss and the cause of the heat loss.

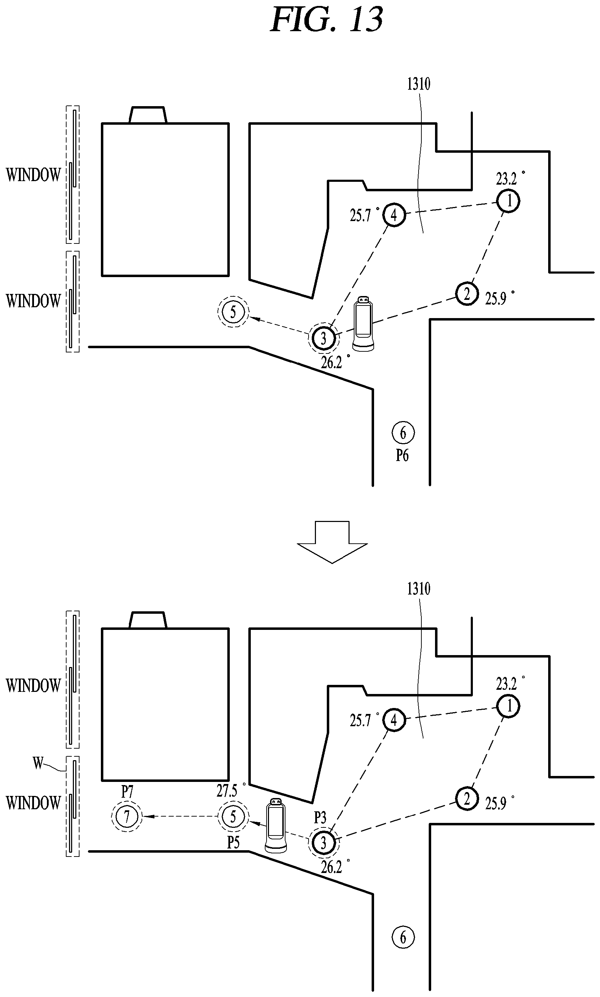

With reference to FIG. 13, the guidance robot 100 first moves to the third location where the abnormality associated with cooling or heating is detected. Subsequently, the surveillance target, that is, a candidate group of POIs for checking the temperature value is established at the current location that is the third location. In FIG. 13, the fifth and sixth locations are established as a candidate group of POIs.

Thereafter, the processor 180 of the guidance robot 100 selects one with a high expected abnormality detection weight, as a search POI, from the established candidate group of POIs. At this point, for example, the high expected abnormality detection weight may indicate that a high weight score is applied to a point where the temperature roughly detected through the thermal camera of the guidance robot 100 is high.

The sixth POI in the candidate group of POIs, which has the high expected abnormality detection weight, is selected as the search POI. Thereafter, the guidance robot 100 moves to the fifth location and measures a temperature value. As a result of the measurement, the fifth location is compared in terms of temperature with the other POIs (the POIs 1, 2, and 4) within a surveillance area 1310. When the result of comparison indicates that the abnormality associated with cooling or heating is detected, the candidate group of POIs is established using the fifth location as a reference, and the next search POI (e.g., the seventh POI) is repeatedly selected.

According to an embodiment, either the search POI or at least one of the next search POIs is located outside the surveillance area.

According to an embodiment, the guidance robot 100 travels to the search POI, cumulatively collects the state information of the traveling space, and detects the next search POI based on the result of the collection. At this point, the guidance robot 100 may generate a heat map by connecting the search POIs. Then, based on the generated heat map, the guidance robot 100 may determine a direction with a high weighting for determining the next search POI.

The guidance robot 100 may recognize the third, fifth, and seventh locations as abnormality detection paths and move closer to the source of the heat loss.

The guidance robot 100 may output information regarding a corresponding operation associated with the identified surveillance target (e.g., a temperature value or the path to the source of heat loss) to the display 151 of the guidance robot. In a case where the guidance robot 100 is able to perform a process independently (e.g., transmitting a signal to close the window) or initiate remote control, it performs a corresponding operation. However, in a case where the guidance robot 100 is unable to perform a process independently, it requests assistance from a nearby apparatus or the manager.

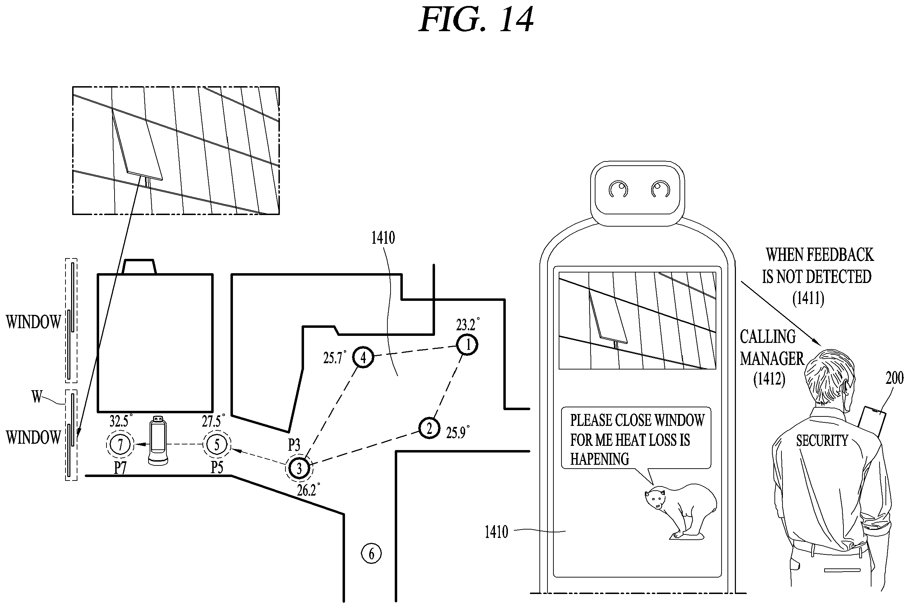

With reference to FIG. 14, the guidance robot 100 may recognize an open window state (W), which causes heat loss, and then output guidance voice to the surroundings, requesting that the window be closed and/or display guidance information (e.g., 'Please close the window. Heat loss is occurring') 1410 to request a corresponding operation on the display 151.

According to an embodiment, when it is verified that there is no feedback response (e.g., no confirmation that the window has been closed) to guidance voice or the displayed information within a predetermined time period (1411), the guidance robot 100 may transmit the result of identifying the surveillance target and a corresponding operation associated with the identified surveillance target to a predetermined terminal of the manager through the communication unit (1412).

Therefore, the presence of a specific area where heat loss occurs during cooling or heating within a building may be detected more quickly than when using a BMS, and assistance may be requested from a nearby visitor. Thus, the cause of the heat loss can be addressed more promptly.

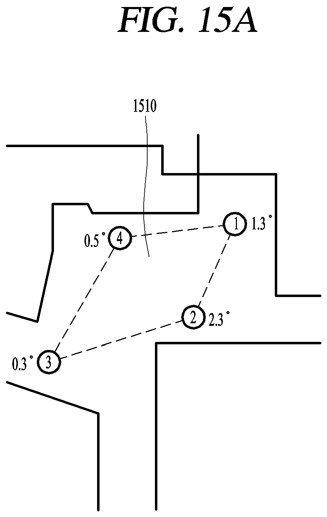

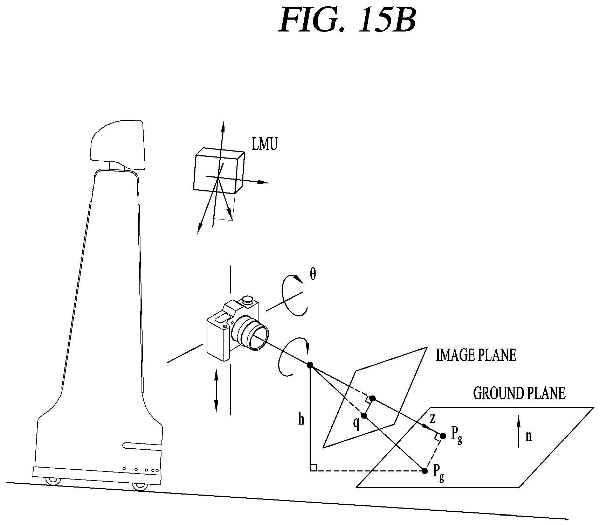

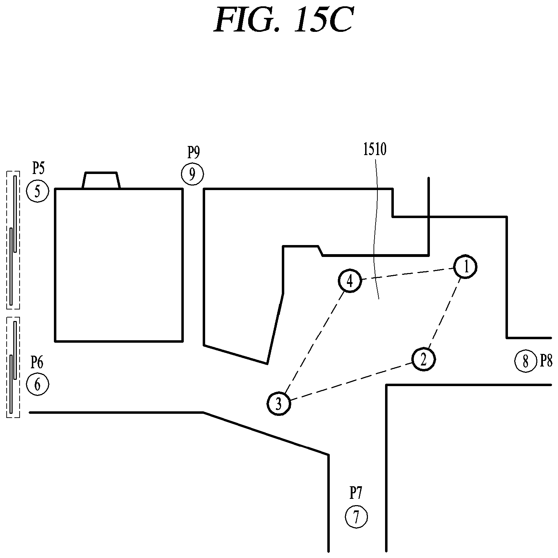

In another embodiment, FIGS. 15A, 15B, and 15C are views that are referenced to describe an example of a method of checking the managed state of a building when an abnormal inclination of the floor surface of the building is detected while monitoring the surveillance area.

First, with reference to 15A, while repeatedly traveling the established POIs 1, 2, 3, and 4 to monitor a surveillance area 1510, the guidance robot 100 may measure the inclined state of the floor at each of the POIs 1, 2, 3, and 4 through the inclination detection sensor 144 of the sensing unit 140.

At this point, the inclination detection sensor 144 may include, for example, an IMU sensor and a depth camera. At this point, the IMU sensor is a sensor capable of measuring the current location and posture of the guidance robot 100 using an accelerometer, a gyroscope, and a magnetometer. Normally, the IMU sensor is configured with three gyroscopes and three accelerometer and provides six DOFs (X, Y, Z, Roll, Pitch, and Yaw) as measurement values.

Specifically, as illustrated in FIG. 15B, the guidance robot 100 performs localization by measuring a value (a first measurement value) of the degree of its inclination with respect to each of the three axes. The guidance robot 100 analyzes an image plane and a ground plane image, which are obtained through the depth camera, and computes the degree of inclination of the floor (a second measurement value). The second measurement is also used as a correction value to distinguish between an obstacle and the floor.

The guidance robot 100 receives sensing values at intervals of approximately 100 msec through the IMU sensor and the depth camera to obtain the first and second measurement values.

The obtained first measurement value indicates the degree to which the guidance robot 100 is inclined at its current position, and the second measurement value indicates the degree to which the floor in front of the depth camera is inclined.

The guidance robot 100 may identify the degree to which the ground is inclined at the current location, based on the first and second measured values. The identified inclination degrees are cumulatively stored in the memory 170 or an external server, thereby constructing a database.

With reference back to FIG. 15A, for example, when it is detected that the degree to which the ground is inclined at a specific POI (the second POI) reaches or exceeds a reference value, tracking is performed to detect the degree to which the ground is inclined with respect to all portions or a portion of a building that is outside the surveillance area 1510.

Accordingly, as illustrated in FIG. 15C, a plurality of additional POIs, for example, additional POIs 5, 6, 7, 8, and 9, which are outside the surveillance area 1510, where an abnormality is detected, are established. The guidance robot 100 cumulatively detects the degrees to which the ground is inclined, through the IMU sensor and the depth camera, while sequentially traveling through the additional POIs 5, 6, 7, 8, and 9. At this time, for the additional POIs, unlike the detection of an abnormality associated with cooling and heating, which is described with reference to FIGS. 12 to 14, a detection path is not generated by repeating a process of selecting a candidate POI and then selecting a detection POI. That is, a plurality of points that are separated from each other are selected as the additional POIs 5, 6, 7, 8, and 9 to detect the inclination of the ground with respect to all portions or a portion of a building.

In a case where a situation is not urgent, the operating process for the detection of the degree to which the ground is inclined may be postponed to a later time. For example, during the day, the guidance robot 100 may continue to monitor the surveillance area. While at night, the guidance robot 100 may measure the degree of inclination while traveling through the additional POIs 5, 6, 7, 8, and 9 to detect the inclined state of the floor.

As described above, a guidance robot and a method of operating the guidance robot according to some embodiments of the present disclosure are capable of actively establishing a traveling path within a surveillance or changing an existing traveling path based on types of state information, such as the remaining battery charge, the estimated time required to monitor the entire surveillance area, and the presence of another cooperative guidance robot, while considering the field of view of a surveillance camera. Accordingly, more effective and intelligent surveillance can be performed instead of uniform surveillance. In addition, segmented or specialized surveillance, such as epidemic prevention or protected area surveillance, is possible. When a problem occurrence event takes place, tracking of an associated target and an appropriate corresponding operation can be performed. In addition, as the appropriate response operation, a feedback response can be requested, and in a case where there is no response to the request, an alert notification can be delivered to a manager. Accordingly, more appropriate and detailed abnormality detection and a corresponding operation can be performed depending on the situation.

Further scope of applicability of the present disclosure will become apparent from the following detailed description. However, since it could be clearly understood by those skilled in the art various changes and modifications are made within the spirit and scope of the present disclosure, the detailed description and specific embodiments such as preferred embodiments of the disclosure should be understood as being given only as examples.

The features, structures, effects, and the like described in the embodiments above are included in at least one embodiment of the disclosure, and are not necessarily limited to only one embodiment. Furthermore, the features, structures, effects, and the like illustrated in each embodiment may be combined or modified in other embodiments by a person skilled in the art to which the embodiments pertain. Therefore, the contents related to these combinations and modifications should be interpreted as falling within the scope of the disclosure.

Although the description above focuses on embodiments, these are merely examples and do not limit the disclosure, and it will be understood by those skilled in the art to which the disclosure pertains that various modifications and applications not exemplified above are possible without departing from the essential characteristics of the embodiments. For example, each component illustrated in the embodiments may be implemented in a modified form. Variations concerning these modifications and applications should be interpreted as being included within the scope of the disclosure defined in the appended claims.

## Claims

1. A guidance robot comprising:
a camera that, when activated, captures an image of the surroundings of the guidance robot;
a traveling-enabling unit that moves the guidance robot;
a sensing unit that collects state information of the guidance robot; and
a processor that is electrically connected to the camera, the traveling-enabling unit, and the sensing unit,
wherein the processor activates the camera by executing a surveillance move, receives the state information of the guidance robot while the guidance robot travels within a surveillance area in the surveillance mode, and
determines a traveling path within the surveillance area based on the received state information of the guidance robot.

2. The guidance robot of claim 1, wherein the processor determines the traveling path in such a manner as to monitor the entire surveillance area, based on the field of view of the camera.

3. The guidance robot of claim 1, wherein the state information of the guidance robot includes at least one of the following: the remaining battery charge of the guidance robot, the estimated time required to monitor the entire surveillance area, and the presence of another collaborative guidance robot.

4. The guidance robot of claim 3, wherein the processor executes a power-saving mode based on the remaining battery charge of the guidance robot, moves the guidance robot to a specific location within the surveillance area by controlling the traveling-enabling unit when executing the power-saving mode, and thus monitors the surveillance area, and,
wherein the specific location varies depending on situational information collected in the surveillance area.

5. The guidance robot of claim 1, wherein the processor recognizes the occurrence of a pre-established surveillance event while the guidance robot travels within the surveillance area, performs an operation corresponding to the recognized surveillance event, and then resumes monitoring the surveillance area.

6. The guidance robot of claim 5, wherein the pre-established surveillance event is a situational context associated with at least one of the following: visitor condition surveillance, visitor surveillance for epidemic prevention, protected area surveillance, or in-building condition surveillance.

7. The guidance robot of claim 6, wherein the processor computes a POI location for performing an operation corresponding to the recognized surveillance event based on a location where the situational context occurs and establishes the next traveling path based on the computed POI location and the current location of the guidance robot.

8. The guidance robot of claim 6, further comprising:
a touchscreen that displays information associated with the recognized surveillance event,
wherein the processor is electrically connected to the touchscreen and, through the touchscreen, requests a feedback response to an operation corresponding to the recognized surveillance event.

9. The guidance robot of claim 1, wherein the sensing unit collects state information of a traveling space, and wherein the processor determines the next traveling direction based on the collected state information of the traveling space while the guidance robot travels within the surveillance area in the surveillance mode, identifies a surveillance target corresponding to the state information of the traveling space, which is collected while the guidance robot travels in the determined traveling direction, and performs a corresponding operation associated with the identified surveillance target.

10. The guidance robot of claim 9, wherein the state information of the traveling space is state data including at least one of the following: temperature data, slip data, or inclination data of the traveling space.

11. The guidance robot of claim 10, wherein the next traveling direction of the guidance robot is determined to be a direction associated with a point where an abnormality is detected as a result of analyzing the state data of the traveling space.

12. The guidance robot of claim 11, wherein the processor establishes a candidate group of POIs for identifying the surveillance target based on the point where the abnormality is detected, and selects one with a high expected abnormality detection weight, as a search POI, from the established candidate group of POIs, and
wherein, after the guidance robot travels to the search POI, the processor cumulatively collects the state information of the traveling space and detects the next search POI based on the result of the collection.

13. The guidance robot of claim 12, wherein at least one of the following is located outside the surveillance area: the search POI or the next search POI.

14. The guidance robot of claim 9, further comprising:
a touchscreen on which to display information associated with a corresponding operation associated with the identified surveillance target.

15. The guidance robot of claim 14, further comprising:
a communication unit,
wherein the processor verifies that there is no feedback response to the displayed information within a predetermined time period, and transmits the result of identifying the surveillance target and a corresponding operation associated with the identified surveillance target to a predetermined terminal of a manager through the communication unit.

16. A method of operating a guidance robot, the method comprising:
a step of executing a surveillance mode by activating a camera of the guidance robot;
a step of acquiring state information of the guidance robot while the guidance robot travels within a surveillance area in the surveillance mode; and
a step of determining a traveling path within the surveillance area in a manner that varies based on the acquired state information of the guidance robot.
